# EUROPÄISCHE PATENTSCHRIFT

(11) **EP 1 039 178 B1**
(45) Veröffentlichungstag und Bekanntmachung des Hinweises auf die Patenterteilung: **03.08.2005**
(21) Anmeldenummer: 00101316.8
(22) Anmeldetag: 22.01.2000
(51) Int. Cl.: F16H 59/08, F16H 59/02

(54) **Vorrichtung und Verfahren zum Steuern eines selbsttätig schaltenden Getriebes**
Device and control method for controlling an automatic transmission
Dispositif et méthode pour commander des changements de vitesse dans une transmission automatique

(30) Priorität: 23.03.1999 DE 19912963
(43) Veröffentlichungstag der Anmeldung: 27.09.2000
(73) Patentinhaber: Dr.Ing. h.c.F. Porsche Aktiengesellschaft, 70435 Stuttgart (DE)
(72) Erfinder: Marchart, Horst, 70374 Stuttgart (DE)

(56) Entgegenhaltungen:
- DE-A- 3 626 100
- DE-A- 4 005 588
- DE-A- 4 311 886
- DE-A- 19 736 406
- DE-A- 19 740 648
- US-A- 5 865 705

## Beschreibung

Die Erfindung betrifft eine Vorrichtung und ein Verfahren zum Steuern eines selbsttätig schaltenden Getriebes nach den Gattungen der unabhängigen Ansprüche.

Um dem Fahrer eines Fahrzeuges in besonderen Situationen auch bei selbsttätig schaltenden Getrieben die Möglichkeit der direkten Beeinflussung der gewählten Übersetzung zu geben, ist es aus der DE-Z "Automobiltechnische Zeitschrift" Heft 6/1990, Seite 308 bis 319 bekannt, neben einem Automatikbetrieb einen Manuellbetrieb vorzusehen, in dem der Fahrer einzelne Gänge des Stufenautomaten direkt anwählen kann. Zu diesem Zweck ist parallel zu einer Schaltgasse für den Automatikbetrieb eine zweite Schaltgasse für den manuellen Betrieb vorgesehen, in der der Fahrer durch eine wippenartige Bewegung eines Schalthebels jeweils eine Rück- oder Hochschaltung um einen Gang veranlassen kann. Eine ähnliche Vorrichtung für stufenlose Getriebe ist aus der CH-Z "Automobil Revue" Heft 51/1992, Seite 23, bekannt.

Darüber hinaus ist es bekannt, Gangwechsel in einem fremdkraftbetätigten Getriebe durch eine Wähleinrichtung von einem Lenkrad eines Fahrzeuges aus zu veranlassen (beispielsweise DE-Z "Auto Motor Sport" Heft 22/1991, Seite 300).

Außerdem ist aus der DE 43 11 886 A1 eine Vorrichtung und ein Verfahren zum Steuern eines selbsttätig schaltenden Getriebes bekannt, bei der die Steuerung von einer automatischen Betriebsart in eine manuelle Betriebsart wechselt, wenn mit einem Fahrstufenschalter eine Stellung M angetippt wird oder wenn mittels einer im Lankrad vorgesehenen Schaltwippe für einen vorgegebenen Zeitraum, beispielsweise 0,7 sec, ein Schaltsignal abgegeben wird. Die manuelle Betriebsart wird wieder verlassen, wenn mit dem Fahrstufenschalter eine Stellung M erneut angetippt wird oder für einen vorgegebenen Zeitraum, beispielsweise 1,5 sec, ein Hochschaltsignal gegeben wird. Schließlich kann ein Verlassen der vom Fahrer beeinflußten Betriebsart vorgesehen sein, wenn diese Betriebsart über einen vorgegebenen Zeitraum aktiv war. Insgesamt handelt es sich jedoch stets um eine Umschaltung von der automatischen in die manuelle Betriebsart und umgekehrt.

Die gattungsbildende DE 197 36 406 A1 zeigt eine Einrichtung zum Steuern eines automatischen Getriebes für ein Kraftfahrzeug, bei der eine automatische Betriebsart verlassen werden kann, indem eine Wähleinrichtung für die Gangwahl betätigt wird. Für die Rückführung aus der manuellen Betriebsart in die automatische Betriebsart werden verschiedenen Bedingungen geprüft. Unter anderem ist es vorgesehen, in die automatische Betriebsart zurückzukehren, wenn für einen vorgegebenen Zeitraum keine Schaltbefehle mehr gegeben wurden. Alternativ ist vorgesehen, die Zeitspanne von einer Schaltfrequenz in der manuellen Betriebsart abhängig zu machen.

Es ist Aufgabe der Erfindung, eine Vorrichtung und ein Verfahren zu schaffen, mit dessen Hilfe ein an sich selbsttätig schaltendes Getriebe mit einer Wähleinrichtung kurzzeitig vom Fahrer beeinflußbar ist.

Diese Aufgabe wird erfindungsgemäß durch die Merkmale der unabhängigen Ansprüche gelöst. Hierzu wechselt die Steuerung von der in einer Stellung D der ersten Wähleinrichtung (des Fahrstufenschalters) normalerweise gewählten automatischen Betriebsart ohne Auswahl durch die erste Wähleinrichtung zeitweise in die vom Fahrer beeinflußte Betriebsart, wenn eine zweite, am Lenkrad angeordnete Wähleinrichtung (eine Wippe oder ein anderes Signalmittel) betätigt wird. Von besonderem Vorteil ist es hierbei, daß diese Umschaltung kein dauerhaftes Verlasssen der automatischen Betriebsart bedarf. Daher ist die Erfindung besonders geeignet, um eine Rückschaltung vor einer Kurve oder bei der Einfahrt in einen Ort einzuleiten: im Anschluß an die kurzzeitige direkte Beeinflussung durch den Fahrer bei der Auswahl des Getriebeganges wird wieder die automatische Betriebsart aktiv. Die Zeitdauer ist dabei vorzugsweise fest eingestellt und beginnt vorzugsweise mit jeder Betätigung der am Lenkrad angeordneten Wähleinrichtung von neuem zu laufen. Es ist aber auch möglich, die Wahl der Zeitdauer von Betriebsparametern des Fahrzeuges wie Fahrgeschwindigkeit, Drehzahl oder Getriebegang abhängig zu machen. Anstelle der Betriebsparameter kann auch eine den Fahrstil bewertende Größe treten. Ferner ist die Erfindung unabhängig von der gewählten Getriebebauart und insbesondere für Stufengetriebe und stufenlose Getriebe anwendbar. Ebenso ist sie unabhängig von der räumlichen Anordnung der Wähleinrichtungen und deren Aufbau.

Vorteilhafte Weiterbildungen der Erfindung sind in den Unteransprüchen beschrieben. Dort ist es vorgesehen, daß eine Unterscheidungseinrichtung durch Auswertung der Signale der beiden Wähleinrichtungen eine von zwei Übersetzungsbestimungseinrichtungen zur Wahl der Getriebeübersetzung bestimmt. Jeder Übersetzungsbestimungseinrichtung ist eine Betriebsart zugeordnet. Hierzu sind vorzugsweise zwei Signalauswerteeinrichtungen sowie eine Umschalteinrichtung vorgesehen; während die Signalauswerteeinrichtungen jeweils einer Wähleinrichtung zugeordnet sind und deren Signale auswerten kommt der Umschalteinrichtung die Auswahl der Übersetzungsbestimungseinrichtung, d.h. der Betriebsart, abhängig von den Signalen der Signalauswerteeinrichtungen zu.

Zwischen der Signalauswerteeinrichtung für die zweite Wähleinrichtung und der Umschalteinrichtung ist ein Zeitglied in Form einer Ausschaltverzögerung vorgesehen. Dieses Zeitglied sorgt dafür, daß ein Siganl der zweiten Wähleinrichtung für einen vorgegebenen Zeitraum erhalten bleibt. Von besonderem Vorteil ist es, wenn das Zeitglied durch ein Signal eines Kick-down-Schalters zurückgesetzt wird. Dann kann durch einen Kick-down sofort die erste, automatische Betriebsart wieder aktiviert werden, und es besteht nicht die Gefahr, daß der Fahrer z.B. bei einem Überholvorgang die notwendige Auslösung einer Übersetzungsänderung nicht einleitet. Alternativ oder ergänzend hierzu erhält das Zeitglied ein Signal eines Querbeschleunigungs-Grenzwertgebers und ein Signal eines Zug-Schub-Detektors. Das Zeitglied wird dabei nach Zeitablauf nur dann zurückgesetzt, wenn ein voreingestellter Betrag der Querbeschleunigung unterschritten ist und gleichzeitig Zugbetrieb herrscht. Nicht auf Zugbetrieb soll auch dann erkannt werden, wenn das Fahrzeug ohne Betätigung des Fahrpedales steht oder rollt. Durch diese Maßnahme wird z.B. bei schneller Kurvenfahrt nicht von der manuellen in die automatische Betriebsart gewechselt, und im Schubbetrieb bleibt die manuell gewählte Übersetzung erhalten. Dies ist besonders nützlich bei Bergabfahrt, der Einfahrt in eine Ortschaft oder der Wahl der dem ersten gang entsprechenden Übersetzung vor einer roten Ampel.

Weiter ist es vorgesehen, daß nach einem Wechsel der Betriebsart durch Betätigung der zweiten Wähleinrichtung diese Betätigung der zweiten Wähleinrichtung nicht als Befehl zur Änderung der Übersetzung interpretiert wird. Eine Änderung der Übersetzung erfolgt dann erst mit der nächsten Betätigung der zweiten Wähleinrichtung. Alternativ ist es vorgesehen, daß nach einem Wechsel der Betriebsart der Befehl zur Änderung der Übersetzung unmittelbar ausgeführt wird.

Die Verfahrensansprüche teilen die Wirkungen und Vorteile der entsprechenden Vorrichtungsansprüche.

Die Erfindung ist nachstehend anhand eines in den Zeichnungen dargestellten Ausführungsbeispieles beschrieben. Es zeigen:
- Fig. 1: eine erfindungsgemäße Steuervorrichtung,
- Fig. 2: eine Umschalteinrichtung der Steuervorrichtung, und
- Fig. 3: ein Flußdiagramm des erfindungsgemäßen Verfahrens.

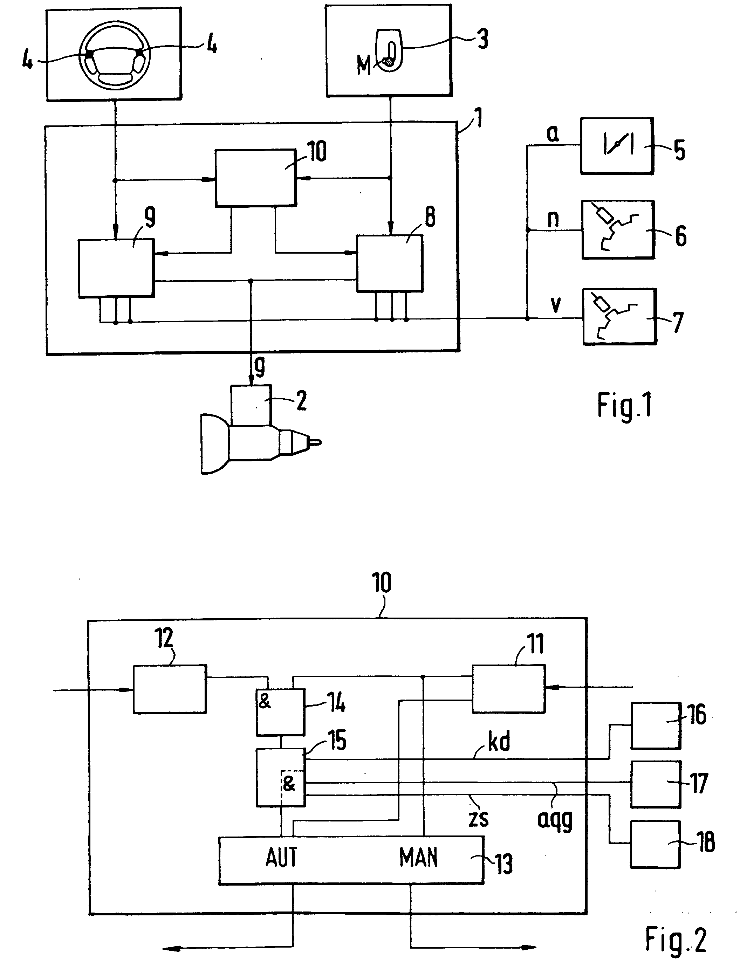

Eine in Fig. 1 gezeigte Steuervorrichtung 1 steuert ein automatisches Getriebe 2 und erhält Signale von einem Fahrstufenschalter 3, einer an einem Lenkrad angeordneten Schaltwippe 4 sowie einem Drosselklappengeber 5, einem Motordrehzahlgeber 6 und einem Fahrgeschwindigkeitsgeber 7. Das automatische Getriebe 2 erhält von der Steuervorrichtung 1 ein Gangsignal g und legt den mit dem Gangsignal g angeforderten Getriebegang ein. Der Fahrstufenschalter 3 weist eine erste Gasse zur Bedienung einer ersten, automatischen Betriebsart mit den Stellungen und Fahrstufen P, R, N, D, 3, 2, 1 auf. In der Stellung P ist das Getriebe zum Abstellen des Fahrzeuges ausgangsseitig blockiert. In der Stellung R ist ein Rückwärtsgang einegelegt. In der Stellung N ist kein Gang eingelegt. In der Stellung D wird der einzulegende Getriebegang g aus Betriebsparametern des Fahrzeuges bestimmt. Die Stellungen 3, 2 und 1 entsprechen der Stellung D, wobei jedoch der höchste einzulegende Getriebegang g durch die Stellung des Fahrstufenschalters 3 bestimmt ist. Die Stellungen 3, 2 und 1 sind optional.

Ausgehend von dieser ersten Gasse ist gegenüberliegend der Stufenstellung D eine mit M bezeichnete Ausnehmung vorgesehen. Ein als Bedienelement des Fahrschalters 3 vorgesehener Wählhebel rastet in allen Stellungen ein. Die Schaltwippe 4 ist so am Lenkrad angeordnet, daß sie im Griffbereich des Fahrers liegt und weist neben einer neutralen Mittelstellung zwei Schaltstellungen HS und RS auf, aus denen sie nach Betätigung wieder selbsttätig in die neutrale Mittelstellung zurückkehrt. Die beiden Schaltstellungen lösen ein entsprechendes Hochschaltsignal HS bzw. ein Rückschaltsignal RS aus. Der Drosselklappengeber 5 liefert der Steuervorrichtung 1 ein Drosselklappensignal a, der Motordrehzahlgeber 6 ein Motordrehzahlsignal n und der Fahrgeschwindigkeitsgeber 7 ein Fahrgeschwindigkeitssignal v.

Die Steuervorrichtung 1 weist eine erste Übersetzungsbestimmungseinrichtung 8 für die erste, automatische Betriebsart und eine zweite Übersetzungsbestimmungseinrichtung 9 für die zweite, vom Fahrer beeinflußte Betriebsart sowie eine Unterscheidungseinrichtung 10 auf. Die erste Übersetzungsbestimmungseinrichtung 8 erhält die Signale des Fahrstufenschalters 3 und bestimmt hieraus, abhängig von den Betriebsgrößen Drosselklappensignal a, Motordrehzahlsignal n und Fahrgeschwindigkeitssignal v die einzulegende Gangstufe, die sie dann in Form des Gangstufensignales g an das Getriebe 2 weitergibt. Die zweite Übersetzungsbestimmungseinrichtung 9 empfängt die Schaltsignale HS/RS der Schaltwippe 4 und erzeugt hieraus das Gangstufensignal g, wobei die Betriebsgrößen Drosselklappensignal a, Motordrehzahlsignal n, Fahrgeschwindigkeitssignal v für Plausibilitätsprüfungen und Sicherheitsmaßnahmen wie Überdrehschutz, Abwürgeschutz und ähnliches herangezogen werden. Das Gangstufensignal g wird erst mit der abfallenden Flanke des Schaltsignales HS/RS, d.h. beim Loslassen der Schaltwippe 4, abgegeben.

Die Unterscheidungseinrichtung 10 wertet die Signale des Fahrstufenschalters 3 und der Schaltwippe 4 aus und bestimmt hiernach, ob die erste Übersetzungsbestimmungseinrichtung 8 oder die zweite Übersetzungsbestimmungseinrichtung 9 aktiviert wird.

Der Aufbau der Unterscheidungseinrichtung 10 ist in Fig. 2 beschrieben. Eine erste Signalauswerteeinrichtung 11 ist mit dem Fahrstufenschalter 3 und eine zweite Signalauswerteeinrichtung 12 mit der Schaltwippe 4 verbunden. Die Ausgangssignale der Signalauswerteeinrichtungen 11, 12 sind zu einer Umschalteinrichtung 13 geführt, die ihrerseits entweder die erste Übersetzungsbestimmungseinrichtung 8 oder die zweite Übersetzungsbestimmungseinrichtung 9, jedoch nie beide gleichzeitig, aktiviert. Hierzu sind an der Umschalteinrichtung 13 ein Eingang AUT und ein Eingang MAN vorgesehen. Ein Signal am Eingang AUT veranlasst die Umschalteinrichtung, die erste Übersetzungsbestimmungseinrichtung 8 zu aktivieren und damit die automatische Betriebsart zu wählen. Ein Signal am Eingang MAN aktiviert die zweite Übersetzungsbestimmungseinrichtung 9 und wählt die vom Fahrer (mittels der Schaltwippe 4) beeinflußte Betriebsart. Beide Eingänge MAN und AUT können mehrere Signale aufnehmen und diese auch ggf. logisch miteinander verknüpfen.

Die erste Signalauswerteeinrichtung 11 erkennt aus der Auswertung des Signals des Fahrstufenschalters 3, ob sich dieser in der Stellung M befindet. Ist dies der Fall, so gibt sie ein Signal auf den Eingang MAN der Umschalteinrichtung 13, so daß nun die vom Fahrer beeinflußte Betriebsart gewählt ist. Erkennt die erste Signalauswerteeinrichtung11, daß sich der Fahrstufenschalter 3 nicht mehr in der Stellung M befindet, so gibt sie ein Signal auf den Eingang AUT der Umschalteinrichtung 13 und wählt damit die automatische Betriebsart. Insgesamt wird durch die Umschalteinrichtung 13 die erste Übersetzungsbestimmungseinrichtung 8 aktiviert, solange sich der Fahrstufenschalter 3 in der Stellung D befindet, und die zweite Übersetzungsbestimmungseinrichtung 9 aktiviert, solange sich der Fahrstufenschalter 3 in der Stellung M befindet.

Die zweite Signalauswerteeinrichtung 12 wertet das Signal der Schaltwippe 4 dahingehend aus, daß sie prüft, ob ein Hochschaltsignal HS oder ein Rückschaltsignal RS anliegt. Ist dies der Fall, so wird an ein UND-Glied 14 ein Signal abgegeben. Der andere Eingang des UND-Gliedes 14 ist mit einem Ausgang der ersten Signalerkennungseinrichtung 11 verbunden, der ein Signal abgibt, wenn sich der Fahrstufenschalter 3 in der Stellung D befindet.

Der Ausgang des UND-Gliedes 14 ist auf ein Verzögerungsglied 15 geführt, das eine Ausschaltverzögerung mit programmierbarer Dauer t beinhaltet. Der Ausgang des Verzögerungsgliedes 15 ist mit dem Eingang MAN der Umschalteinrichtung 13 verbunden. Das Verzögerungsglied 15 erhält ferner ein Signal kd eines Kick-down-Schalters 16. Liegt ein solches Signal kd am Verzögerungsglied 15 an, so wird das Verzögerungsglied 15 unmittelbar zurückgesetzt und gibt kein Signal mehr ab.

Über zwei weitere, über ein internes UND-Glied verknüpfte Eingänge erhält das Verzögerungsglied 15 außerdem Signale aqg eines Querbeschleunigungs-Grenzwertgebers 17 und zs eines Zug-Schub-Detektors 18. Der Querbeschleunigungs-Grenzwertgebers 17 gibt dabei das Signal aqg ab, wenn der Betrag der Querbeschleunigung einen voreingestellten Wert aqmax unterschreitet. Der Zug-Schub-Detektors 18 gibt das Signal zs ab, wenn Zugbetrieb herrscht. Nur wenn beide Signale aqg, zs am Verzögerungsglied 15 gleichzeitig anliegen, wird nach Ablauf der programmierten Dauer t das Ausgangssignal des Verzögerungsgliedes 15 zurückgesetzt.

Anstelle des UND-Gliedes 14 und des Verzögerungsgliedes 15 kann mit gleicher Wirkung die vorbeschriebene Verarbeitung des Schaltsignales HS/RS, des Signales D des Fahrstufenschalters 3 sowie der Signale kd, aqg und zs auch in der Umschalteinrichtung 13 erfolgen.

Die beschriebene Vorrichtung wirkt wie folgt: Zunächst wird das Fahrzeug in der automatischen Betriebsart betrieben, d.h. der einzulegende Getriebegang wird selbsttätig aus den Betriebsgrößen des Fahrzeuges bestimmt und eingestellt. Wünscht nun der Fahrer den Wechsel in die zweite, von ihm beeinflusste Betriebsart, so bewegt er den Fahrstufenschalter 3 aus der Stellung D in die Stellung M. Nun kann der Fahrer über die Schaltwippe 4 im Lenkrad Hochschaltungen oder Rückschaltungen auslösen, indem er die Schaltwippe im Sinne einer Hochschaltung oder im Sinne einer Rückschaltung betätigt. Erreicht das Fahrzeug für die Steuerung erkennbare Betriebsgrenzen (Überdrehen, Abwürgen o.ä.) für den gerade eingelegten Getriebegang, so wird auch ohne Schaltbefehl des Fahrers eine Schaltung ausgelöst, um das Fahrzeug wieder in die zulässigen Betriebsgrenzen zu bringen.

Alternativ hierzu kann der Fahrer kurzzeitig in die zweite, von ihm beeinflußte Betriebsart gelangen, indem er in der Stellung D des Fahrstufenschalters 3 eine Hoch- oder eine Rückschaltung über die Schaltwippe 4 anfordert. In diesem Fall wird, neben dem Wechsel in die zweite Betriebsart, anschließend an den Wechsel die angeforderte Schaltung durchgeführt, weil das Signal der Schaltwippe 4 an der zweiten Übersetzungsbestimmungseinrichtung 9 ansteht (Auslösung des Gangstufensignales g mit der negativen Flanke der Schaltsignale HS/RS).

Die erste, automatische Betriebsart wird automatisch wieder gewählt, wenn die programmierten Dauer t nach dem Schaltsignal HS der RS abgelaufen ist und sowohl der Betrag der Querbeschleunigung unterhalb eines vorgegebenen Grenzwertes liegt als auch kein Schubbetrieb herrscht. Wenn während der Dauer dieses kurzzeitigen Aufrufes der zweiten, vom Fahrer beeinflußten Betriebsart ein Signal kd eines Kick-down-Schalters 16 anliegt, wird sofort wieder die erste, automatische Betriebsart gewählt.

Alternativ kann die zweite Übersetzungsbestimmungseinrichtung 9 so gestaltet sein, daß sie das Signal von der Wippe 4, das zum Wechsel in die zweite Betriebsart führte, nicht akzeptiert. Erst auf erneute Anforderung durch die Wippe 4 wird dann ein Gangwechsel ausgeführt.

Ergänzend hierzu kann es, z.B. zum "Herausschaukeln" bei winterlichen Straßenverhältnissen vorgesehen sein, daß der Fahrer auch in der Stellung R des Fahrstufenschalters 3 durch Betätigen der Schaltwippe 4 die Wahl des Ganges direkt beeinflussen kann. Hierbei ist der Fahrer auf den ersten Getriebegang und den Rückwärtsgang beschränkt, so daß er durch einen Hochschaltebefehl den ersten Getriebegang und durch den Rückschaltebefehl den Rückwärtsgang einlegt und damit rasch zwischen diesen beiden Gängen wechseln kann.

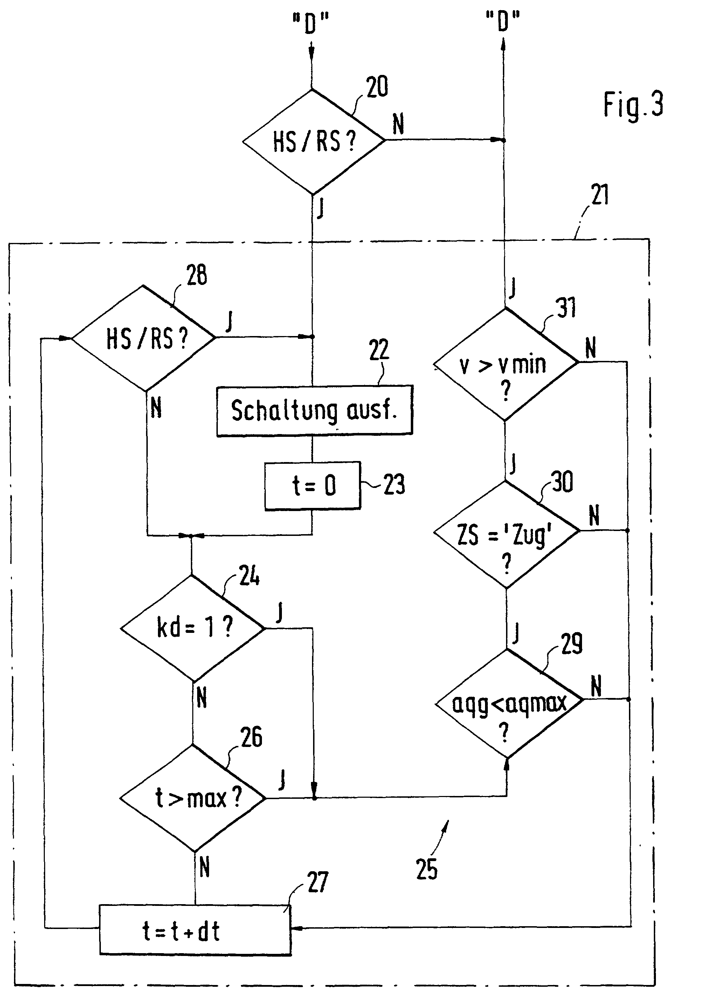

Die Steuervorrichtung 1 kann selbstverständlich auch in Form eines Mikrocomputers ausgeführt sein. Ein solcher Mikrocomputer arbeitet nach einem nach dem nachfolgend beschriebenen Verfahren erstellten Programm. Die Steuervorrichtung 1 steuert zunächst mit einer nicht dargestellten Gruppe von Schritten das Getriebe 2 in der ersten, automatischen Betriebsart an, indem es nach den Betriebsgrößen Drosselklappensignal a, Motordrehzahlsignal n und Fahrgeschwindigkeitssignal v mit Hilfe gespeicherter Kennfelder den einzulegenden Getriebegang bestimmt und eine Anforderung für diesen Getriebegang an das Getriebe 2 ausgibt. In einem Teil dieses Verfahrens wird das Signal der Wippe 4 abgefragt. Der in Fig. 3 dargestellte Schritt 20 ist Bestandteil dieser Abfrage. In Schritt 20 wird geprüft, ob mit der Schaltwippe 4 ein Hochschalt- oder ein Rückschaltsignal HS/RS abgegeben wurde. Ist dies nicht der Fall, so verbleibt die Steuervorrichtung 1 in ihrer automatischen Betriebsart, hier gekennzeichnet durch die Fahrstufe D. Liegt hingegen ein Hochschalt- oder Rückschaltsignal HS/RS an, so wird in das Programm zur manuellen Kurzzeitbeeinflussung 21 verzweigt.

Das Programm 21 beginnt in seinem ersten Schritt 22 mit der Ausführung der durch das Hochschalt- oder Rückschaltsignal HS/RS angeforderten Schaltung. Dieser erste Schritt 22 ist in einer alternativen Ausführung des Verfahrens nicht vorgesehen, wenn das Programm 21 durch ein erstes Hochschalt- oder Rückschaltsignal HS/RS zunächst lediglich aufgerufen werden soll, ohne daß sogleich eine Schaltung ausgeführt wird.

Im nächsten Schritt 23 wird ein Zeitzähler t auf den Wert Null zurückgesetzt.

Im Schritt 24 wird ein Kickdown-Signal kd abgefragt. Liegt ein solches Signal vor, so wird seine Aufstiegsroutine 25 verzweigt. Anderenfalls wird das Programm mit Schritt 26 fortgesetzt, in dem überprüft wird, ob der Zähler t seinen Maximalwert - hier entsprechend einer Zeitdauer von 8 Sekunden - erreicht hat. Ist der Maximalwert erreicht oder überschritten, so wird ebenfalls zur Aufstiegsroutine 25 verzweigt und ansonsten das Programm mit Schritt 27 fortgesetzt, indem der Zeitzähler t um ein Zeitinkrement dt erhöht wird.

Im darauffolgenden Schritt 28 wird wiederum geprüft, ob ein Hochschalt- oder Rückschaltsignal HS/RS vorliegt. Ist dies der Fall, so wird der Programmablauf mit Schritt 22 fortgesetzt, während ansonsten direkt zu Schritt 24 verzweigt wird.

Die Ausstiegsroutine 25 besteht aus drei Prüfschritten 29 bis 31. Im ersten Prüfschritt 29 wird geprüft, ob das Signal AQG für die Querbeschleunigung des Fahrzeuges kleiner als ein voreingestellter Maximalwert AQmax ist. Im nächsten Schritt wird geprüft, ob das Signal ZS einen Zugbetrieb des Fahrzeuges anzeigt.

Schließlich wird in Schritt 31 geprüft, ob die Fahrgeschwindigkeit v des Fahrzeuges größer als ein Minimalwert von hier 5 km/h ist. Ist eine der in den Schritten 29 bis 31 geprüften Bedingungen nicht erfüllt, so wird der Programmablauf bei Schritt 27 fortgesetzt. Sind hingegen alle drei Bedingungen erfüllt, so wird das Programm 21 verlassen.

Zum Signal zs des Zug-Schub-Detektors 18 ist noch anzumerken, daß im vorliegenden Ausführungsbeispiel das Signal zs im Wert "Schub" dann annimmt, wenn das Fahrzeug steht oder mit geringer Geschwindigkeit (kleiner 5 km/h) rollt. Im normalen Fahrbetrieb hingegen wirkt das Signal zs in an sich bekannter Weise aus der Stellung der Drosselklappe DK oder mit alternativen Methoden bestimmt.

Hiermit ergibt sich in den Schritten 30, 31 der Effekt, daß das Programm 21 bei stehendem oder rollendem Fahrzeug und nicht betätigtem Fahrpedal nicht verlassen werden kann. Damit ist es beispielsweise möglich, den ersten Gang als Anfahrgang durch eine Betätigung der Schaltwippe 4 auszuwählen, während in der Fahrstufe D in der automatischen Betriebsart regelmäßig der zweite Gang als Anfahrgang verwendet wird.

Es versteht sich, daß keine automatischen Schaltungen ausgeführt werden dürfen, solange das Programm 21 aktiv ist. Andere Sonderfunktionen, die in der Fahrstufe D vorgesehen sein können, werden beendet, wenn das Programm 21 ausgeführt wird. Von diesen anderen Programmen eingeleitete Schaltvorgänge werden jedoch noch beendet. Das Programm 21 hat somit Priorität gegenüber allen anderen Schaltprogrammen mit Ausnahme der Sicherheitsmaßnahmen, wie Überdrehschutz und Abwürgeschutz.

Anstelle von Gangstufen, denen bei einem stufenlosen Getriebe auch voreingestellte Übersetzungen entsprechen, tritt bei einem stufenlosen Getriebe die Übersetzung des Getriebes, die durch die Schaltwippe 4 vom Fahrer in der zweiten Betriebsart in Sinne einer Erhöhung oder einer Verminderung beeinflußt werden kann.

## Patentansprüche

1. Vorrichtung zum Steuern eines selbsttätig schaltenden Getriebes (2) für ein Fahrzeug mit einer ersten vom Fahrer bedienbaren Wähleinrichtung (3) und einer zweiten vom Fahrer bedienbaren Wähleinrichtung (4), wobei eine das Getriebe ansteuernde Steuervorrichtung (1) in Abhängigkeit von Signalen der Wähleinrichtungen (3, 4) in zwei Betriebsarten betreibbar ist:
- in einer ersten, mittels der ersten Wähleinrichtung (3) auswählbaren automatischen Betriebsart stellt die Steuervorrichtung Übersetzungen des Getriebes selbsttätig nach von Gebern bestimmten Betriebsgrößen ein, und
- in einer zweiten, vom Fahrer beeinflussten Betriebsart stellt die Steuervorrichtung Übersetzungen des Getriebes abhängig vom Signal der zweiten Wähleinrichtung (4) ein,
- wobei die zweite Betriebsart einerseits zeitlich unbegrenzt mittels der ersten Wähleinrichtung auswählbar ist,
- andererseits die Steuervorrichtung aus der ersten Betriebsart heraus ohne Auswahl durch die erste Wähleinrichtung durch Betätigung der zweiten Wähleinrichtung für einen vorgegebenen Zeitraum in die zweite Betriebsart umschaltbar ist,
**dadurch gekennzeichnet, dass** die Steuervorrichtung auch nach Ablauf des vorgegebenen Zeitraumes nur dann eine Rückschaltung in die erste Betriebsart durchführt, wenn wenigstens die folgenden Bedingungen gleichzeitig erfüllt sind:
- ein Signal (aqg) eines Querbeschleunigungs-Grenzwertgebers (17) unterschreitet einen voreingestellten Betrag, und
- ein Signal (zs) des Zug-Schub-Detektors (18) zeigt Zugbetrieb an.

2. Vorrichtung nach Anspruch 1, **dadurch gekennzeichnet, dass** die Steuervorrichtung (1) eine Unterscheidungseinrichtung (10) aufweist, die Signale der Wähleinrichtungen (3,4) auswertet und daraufhin eine erste Übersetzungsbestimmungseinrichtung (8) für die erste, automatische Betriebsart oder die zweite Übersetzungsbestimmungseinrichtung (9) für die zweite, vom Fahrer beeinflusste Betriebsart aktiviert.

3. Vorrichtung nach Anspruch 2, **dadurch gekennzeichnet, dass** die Unterscheidungseinrichtung (10) eine erste und eine zweite Signalauswerteeinrichtung(11,12) sowie eine Umschalteinrichtung (13) aufweist.

4. Vorrichtung nach Anspruch 3, **dadurch gekennzeichnet, dass** die Unterscheidungseinrichtung (10) ferner ein Zeitglied (14) aufweist, das zwischen der zweiten Signalauswerteeinrichtung (12) und der Umschalteinrichtung (13) vorgesehen ist und auf ein Ausgangsignal der zweiten Signalauswerteeinrichtung (12) hin ein Signal von vorbestimmter Dauer an die Umschalteinrichtung (13) abgibt.

5. Vorrichtung nach Anspruch 4, **dadurch gekennzeichnet, dass** das Zeitglied (15) ein Signal (kd) eines Kickdown-Schalters (16) erhält und auf ein solches Signal hin das Zeitglied zurückgesetzt wird.

6. Vorrichtung nach Anspruch 4 oder 5, **dadurch gekennzeichnet, dass** das Zeitglied (15) das Signal (aqg) des Querbeschleunigungs-Grenzwertgebers (17) und das Signal (zs) des Zug-Schub-Detektors (18) erhält und das Ausgangssignal des Zeitgliedes nur dann zurückgesetzt wird, wenn das Signal (aqg) des Querbeschleunigungs-Grenzwertgebers (17) einen voreingestellten Betrag unterschreitet und gleichzeitig das Signal (zs) des Zug-Schub-Detektors (18) Zugbetrieb anzeigt.

7. Vorrichtung nach einem der Ansprüche 1 bis 6, **dadurch gekennzeichnet, dass** die zweite Signalauswerteeinrichtung (12) auf die Betätigung der zweiten Wähleinrichtung (4) hin die Umschalteinrichtung (13) im Sinne einer Aktivierung der zweiten Übersetzungsbestimmungseinrichtung (9) ansteuert, wobei die zweite Übersetzungsbestimmungseinrichtung (9) dieses Signal der zweiten Wähleinrichtung (4) nicht zur Auswahl der Übersetzung (g) berücksichtigt.

8. Verfahren zum Steuern eines selbsttätig schaltenden Getriebes (2) für ein Fahrzeug, das eine das Getriebe ansteuernde Steuervorrichtung (1), zwei vom Fahrer bedienbare Wähleinrichtungen (3, 4) sowie Geber für Betriebsgrößen des Fahrzeuges (5, 6, 7) aufweist und das
a) eine erste Gruppe von Schritten zur Durchführung einer ersten, automatischen Betriebsart nach Maßgabe der ersten Wähleinrichtung (3) und eine zweite Gruppe von Schritten (22) zur Durchführung einer zweiten, vom Fahrer beeinflussten Betriebsart nach Maßgabe der zweiten Wähleinrichtung (4) beinhaltet, wobei
b) nach Maßgabe der ersten Wähleinrichtung (3) ein zeitlich unbegrenzter Wechsel von der ersten Gruppe zur zweiten Gruppe (21) von Schritten erfolgt und
c) ein zeitlich begrenzter Wechsel von der ersten Gruppe zur zweiten Gruppe (21) von Schritten erfolgt, wenn eine Abfrage der zweiten Wähleinrichtung (4) ergibt, dass diese ein Signal (HS/RS) abgibt
**dadurch gekennzeichnet, dass** ein Wechsel von der zweiten Gruppe (21) zur ersten Gruppe nur dann durchgeführt wird, wenn ein Signal (aqg) eines Querbeschleunigungs-Gebers (17) einen vorgegebenen Grenzwert (aqmax) unterschreitet und gleichzeitig ein Signal (zs) eines Zug-Schub-Detektors (18) Zugbetrieb anzeigt.

9. Verfahren nach Anspruch 8, **dadurch gekennzeichnet, dass** ein Wechsel von der zweiten Gruppe (21) zur ersten Gruppe durchgeführt wird, wenn eine vorbestimmte Verweilzeit in der zweiten Gruppe von Schritten (21) abgelaufen ist.

10. Verfahren nach Anspruch 8 oder 9, **dadurch gekennzeichnet, dass** ein Wechsel von der zweiten Gruppe (21) zur ersten Gruppe unbedingt dann durchgeführt wird, wenn ein Signal (kd) eines Kick-down-Schalters (16) anliegt.

11. Verfahren nach Anspruch 8, 9 oder 10, **dadurch gekennzeichnet, dass** ein Wechsel von der zweiten Gruppe (21) zur ersten Gruppe solange unterbunden wird, wie das Signal (aqg) des Querbeschleunigungs-Gebers (17) einen vorgegebenen Grenzwert (aqmax) unterschreitet und gleichzeitig das Signal (zs) des Zug-Schub-Detektors (18) Zugbetrieb anzeigt.

12. Verfahren nach Anspruch 11, **dadurch gekennzeichnet, dass** der Wechsel von der zweiten Gruppe (21) zur ersten Gruppe solange unterbunden wird, solange zusätzlich ein Signal (v) für eine Fahrgeschwindigkeit des Fahrzeuges einen voreingestellten Grenzwert (vmin) überschreitet.

13. Verfahren nach einem der Ansprüche 8 bis 12, **dadurch gekennzeichnet, dass** in der zweiten Gruppe von Schritten (21) das Signal (HS/RS) der zweiten Wähleinrichtung (4), das zum Wechsel in die zweite Gruppe von Schritten (21) führte, gespeichert und anschließend ausgeführt wird.

14. Verfahren nach einem der Ansprüche 8 bis 12, **dadurch gekennzeichnet, dass** in der zweiten Gruppe von Schritten (21) das Signal (HS/RS) der zweiten Wähleinrichtung (4), das zum Wechsel in die zweite Gruppe von Schritten (21) führte, nicht gespeichert und daher auch nicht ausgeführt wird.

15. Verfahren nach Anspruch 8, **dadurch gekennzeichnet, dass** unter der Bedingung, dass sich die erste Wähleinrichtung (3) in einer dritten Stellung (R) befindet, es in der zweiten Gruppe von Schritten (21) nur möglich ist, durch Signale (HS/RS) der zweiten Wähleinrichtung (4) einen ersten Getriebegang oder einen Rückwärtsgang einzulegen.

16. Steuervorrichtung mit einem Mikrocomputer und einem Programm zur Nachbildung des Verfahrens nach einem der Ansprüche 8 bis 15.

## Claims

1. A device for controlling an automatic transmission (2) for a vehicle, comprising a first selector (3) operable by the driver and a second selector (4) operable by the driver, wherein a control device (1), which actuates the transmission, can be operated in two operating modes as a function of signals from the selectors (3, 4):
- in a first, automatic operating mode, which is selectable by means of the first selector (3), the control device automatically sets gear ratios of the transmission according to operating variables determined by sensors, and
- in a second operating mode, which is controlled by the driver, the control device sets gear ratios of the transmission as a function of the signal from the second selector (4),
- wherein on the one hand the second operating mode is selectable by means of the first selector in a temporally unrestricted manner,
- on the other hand the control device is switchable from the first operating mode into the second operating mode for a predetermined period of time by actuation of the second selector without selection by means of the first selector,
**characterised in that**, even after the predetermined period of time has elapsed, the control device is only switched back into the first operating mode when at least the following conditions have been simultaneously satisfied:
- a signal (aqg) from a transverse-acceleration limit sensor (17) falls below a preset value, and
- a signal (zs) from the traction/overrun detector (18) indicates traction operation.

2. A device according to claim 1, **characterised in that** the control device (1) has a differentiation means (10) which evaluates the signals from the selectors (3, 4) and thereupon activates a first gear-ratio determination means (8) for the first, automatic operating mode or activates the second gear-ratio determination means (9) for the second operating mode controlled by the driver.

3. A device according to claim 2, **characterised in that** the differentiation means (10) has a first and a second signal evaluation means (11, 12) and a switching means (13).

4. A device according to claim 3, **characterised in that** the differentiation means (10) also has a timing element (14) which is provided between the second signal evaluation means (12) and the switching means (13) and which emits a signal of predetermined duration to the switching means (13) in response to an output signal from the second signal evaluation means (12).

5. A device according to claim 4, **characterised in that** the timing element (15) receives a signal (kd) from a kickdown switch (16), and the timing element is reset in response to such a signal.

6. A device according to claim 4 or 5, **characterised in that** the timing element (15) receives the signal (aqg) from the transverse-acceleration limit sensor (17) and the signal (zs) from the traction/overrun detector (18), and the output signal from the timing element is only reset when the signal (aqg) from the transverse-acceleration limit sensor (17) falls below a preset value and the signal (zs) from the traction/overrun detector (18) simultaneously indicates traction operation.

7. A device according to any one of claims 1 to 6, **characterised in that** the second signal evaluation means (12), in response to the operation of the second selector (4), actuates the switching means (13) for activation of the second gear-ratio determination means (9), wherein the second gear-ratio determination means (9) does not take this signal from the second selector (4) into consideration for selection of the gear ratio (g).

8. A method of controlling an automatic transmission (2) for a vehicle, which method has a control device (1) actuating the transmission, two selectors (3, 4) operable by the driver, and sensors for operating variables of the vehicle (5, 6, 7), and which comprises
a) a first group of steps for implementing a first, automatic operating mode corresponding to the first selector (3), and a second group of steps (22) for implementing a second operating mode, controlled by the driver, corresponding to the second selector (4), wherein
b) by means of the first selector (3), a temporally unrestricted change-over from the first group to the second group (21) of steps takes place, and
c) a temporally restricted change-over from the first group to the second group (21) of steps takes place if interrogation of the second selector (4) reveals that the latter is emitting a signal (HS/RS),
**characterised in that** a change-over from the second group (21) to the first group is only implemented when a signal (aqg) from a transverse-acceleration limit sensor (17) falls below a preset limit value (aqmax) and a signal (zs) from a traction/overrun detector (18) simultaneously indicates traction operation.

9. A method according to claim 8, **characterised in that** a change-over from the second group (21) to the first group is implemented when a predetermined duration in the second group of steps (21) has elapsed.

10. A method according to claim 8 or 9, **characterised in that** a change-over from the second group (21) to the first group is unconditionally implemented when a signal (kd) from a kickdown switch (16) is present.

11. A method according to claim 8, 9 or 10, **characterised in that** a change-over from the second group (21) to the first group is prevented for as long as the signal (aqg) from the transverse-acceleration limit sensor (17) falls below a preset limit value (aqmax) and the signal (zs) from the traction/ overrun detector (18) simultaneously indicates traction operation.

12. A method according to claim 11, **characterised in that** the change-over from the second group (21) to the first group is additionally prevented for as long as a signal (v) for a travelling speed of the vehicle exceeds a preset limit value (vmin).

13. A method according to any one of claims 8 to 12, **characterised in that**, in the second group of steps (21), the signal (HS/RS) from the second selector (4), which led to the change-over to the second group of steps (21), is stored and then executed.

14. A method according to any one of claims 8 to 12, **characterised in that**, in the second group of steps (21), the signal (HS/RS) from the second selector (4), which led to the change-over to the second group of steps (21), is not stored and therefore also not executed.

15. A method according to claim 8, **characterised in that**, if the first selector (3) is in a third position (R), it is only possible in the second group of steps (21) to engage a first gear or a reverse gear by means of signals (HS/RS) from the second selector (4).

16. A control device with a microcomputer and a program for reproducing the method according to any one of claims 8 to 15.

## Revendications

1. Dispositif de commande d'une transmission automatique (2) pour un véhicule, comportant un premier dispositif de sélection (3) pouvant être commandé par le conducteur et un deuxième dispositif de sélection (4) pouvant être commandé par le conducteur, un dispositif de commande (1), commandant la transmission, pouvant être mis en oeuvre en deux modes de fonctionnement, en fonction de signaux des dispositifs de sélection (3, 4) :
- dans un premier mode de fonctionnement automatique, pouvant être sélectionné au moyen du premier dispositif de sélection (3), le dispositif de commande règle automatiquement les rapports de la transmission suivant des grandeurs de fonctionnement déterminées par des capteurs, et
- dans un deuxième mode de fonctionnement, influencé par le conducteur, le dispositif de commande règle les rapports de la transmission en fonction du signal du deuxième dispositif de sélection (4),
- le deuxième mode de fonctionnement pouvant être sélectionné d'une part de façon non limitée dans le temps, au moyen du premier dispositif de sélection,
- d'autre part le dispositif de commande pouvant être commuté pendant un laps de temps prédéfini, du premier mode de fonctionnement dans le deuxième mode de fonctionnement, sans sélection par le premier dispositif de sélection, par actionnement du deuxième dispositif de sélection,
**caractérisé en ce que** le dispositif de commande n'exécute un retour au premier mode de fonctionnement, même après expiration du laps de temps prédéfini, que si au moins les conditions suivantes sont satisfaites simultanément :
- un signal (aqg) d'un capteur de valeur limite d'accélération transversale (17) sous-dépasse une valeur préréglée, et
- un signal (zs) du détecteur de traction-frein moteur (18) indique un fonctionnement en traction.

2. Dispositif selon la revendication 1, **caractérisé en ce que** le dispositif de commande (1) comporte un dispositif de différenciation (10) qui exploite les signaux des dispositifs de sélection (3, 4) et active ensuite un premier dispositif de détermination de rapport (8) pour le premier mode de fonctionnement automatique ou le deuxième dispositif de détermination de rapport (9) pour le deuxième mode de fonctionnement influencé par le conducteur.

3. Dispositif selon la revendication 2, **caractérisé en ce que** le dispositif de différenciation (10) comporte un premier et un deuxième dispositif d'exploitation de signaux (11, 12) ainsi qu'un dispositif de commutation (13).

4. Dispositif selon la revendication 3, **caractérisé en ce que** le dispositif de différenciation (10) comporte en outre un organe de temps (14) qui est prévu entre le deuxième dispositif d'exploitation de signaux (12) et le dispositif de commutation (13), et, à la suite d'un signal de sortie du deuxième dispositif d'exploitation de signaux (12), délivre un signal de durée prédéterminée au dispositif de commutation (13).

5. Dispositif selon la revendication 4, **caractérisé en ce que** l'organe de temps (15) reçoit un signal (kd) d'un commutateur kick-down (16) et réinitialise l'organe de temps à la suite de ce signal.

6. Dispositif selon la revendication 4 ou 5, **caractérisé en ce que** l'organe de temps (15) reçoit le signal (aqg) du capteur de valeur limite d'accélération transversale (17) et le signal (zs) du détecteur de traction-frein moteur (18), et le signal de sortie de l'organe de temps n'est réinitialisé que si le signal (akg) du capteur de valeur limite d'accélération transversale (17) sous-dépasse une valeur préréglée et, en même temps, le signal (zs) du détecteur de traction-frein moteur (18) indique un fonctionnement en traction.

7. Dispositif selon l'une des revendications 1 à 6, **caractérisé en ce que** le deuxième dispositif d'exploitation de signaux (12) commande, à la suite de l'actionnement du deuxième dispositif de sélection (4), le dispositif de commutation (13) dans le sens d'une activation du deuxième dispositif de détermination de rapport (9), le deuxième dispositif de détermination de rapport (9) ne tenant pas compte de ce signal du deuxième dispositif de sélection (4) pour la sélection du rapport (g).

8. Procédé de commande d'une transmission automatique (2) pour un véhicule qui comporte un dispositif de commande (1) commandant la transmission, deux dispositifs de sélection (3, 4) pouvant être commandés par le conducteur ainsi que des capteurs pour des grandeurs de fonctionnement du véhicule (5, 6, 7), et qui comprend
a) un premier groupe d'étapes pour exécuter un premier mode de fonctionnement automatique suivant le premier dispositif de sélection (3), et un deuxième groupe d'étapes (22) pour exécuter un deuxième mode de fonctionnement influencé par le conducteur, suivant le deuxième dispositif de sélection (4),
b) suivant le premier dispositif de sélection (3), il se produit un changement non limité dans le temps du premier groupe au deuxième groupe (21) d'étapes, et
c) un passage limité dans le temps du premier groupe au deuxième groupe (21) d'étapes se produit lorsqu'une interrogation du deuxième dispositif de sélection (4) indique que celui-ci délivre un signal (HS/RS),
**caractérisé en ce qu'**un passage du deuxième groupe (21) au premier groupe n'est exécuté que si un signal (aqg) d'un capteur d'accélération en même temps, un signal (zs) d'un détecteur de traction-frein moteur (18) indique un fonctionnement en traction.

9. Procédé selon la revendication 8, **caractérisé en ce qu'**un passage du deuxième groupe (21) au premier groupe est exécuté lorsqu'une durée prédéterminée de séjour dans le deuxième groupe d'étapes (21) s'est écoulée.

10. Procédé selon la revendication 8 ou 9, **caractérisé en ce qu'**un passage du deuxième groupe (21) au premier groupe est exécuté absolument lorsqu'un signal (kd) d'un commutateur kick-down (16) s'applique.

11. Procédé selon la revendication 8, 9 ou 10, **caractérisé en ce qu'**un passage du deuxième groupe (21) ou au premier groupe est interdit tant que le signal (aqg) du capteur d'accélération transversale (17) sous-dépasse une valeur limite (aqmax) prédéfinie, et en même temps le signal (zs) du détecteur de traction-frein moteur (18) indique un fonctionnement en traction.

12. Procédé selon la revendication 11, **caractérisé en ce que** le passage du deuxième groupe (21) au premier groupe est interdit tant qu'en supplément un signal (v) pour une vitesse de marche du véhicule dépasse une valeur limite (vmin) préréglée.

13. Procédé selon l'une des revendications 8 à 12, **caractérisé en ce que** dans le deuxième groupe d'étapes (21), le signal (HS/RS) du deuxième dispositif de sélection (4), qui a entraîné le passage dans le deuxième groupe d'étapes (21), est mémorisé puis exécuté.

14. Procédé selon l'une des revendications 8 à 12, **caractérisé en ce que** dans le deuxième groupe d'étapes (21), le signal (HS/RS) du deuxième dispositif de sélection (4), qui a entraîné le passage dans le deuxième groupe d'étapes (21), n'est pas mémorisé et donc pas non plus exécuté.

15. Procédé selon la revendication 8, **caractérisé en ce que** dans la condition dans laquelle le premier dispositif de sélection (3) se trouve dans une troisième position (R), il n'est possible dans le deuxième groupe d'étapes (21) d'engager une première vitesse ou une marche arrière que par des signaux (HS/RS) du deuxième dispositif de sélection (4).

16. Dispositif de commande comportant un micro-ordinateur et un programme pour la mise en oeuvre du procédé selon l'une des revendications 8 à 15.
